# EUROPÄISCHE PATENTANMELDUNG

(11) **EP 4 071 730 A1**
(43) Veröffentlichungstag der Anmeldung: **12.10.2022**
(21) Anmeldenummer: 21167234.0
(22) Anmeldetag: 07.04.2021
(51) Int. Cl.: G07C 9/00

(54) **VORRICHTUNG, ANORDNUNG UND SET**

(71) Anmelder: BKS GmbH, 42549 Velbert (DE)
(72) Erfinder: Braam, Reinhold, 46414 Rhede (DE)
(74) Vertreter: DREISS Patentanwälte PartG mbB

(57) **Zusammenfassung**

Die Erfindung betrifft eine Vorrichtung (10) mit einer ersten Schnittstelle (12) zum Empfangen von Daten von einem Smartphone (300) oder Tablet und einer mit der ersten Schnittstelle (12) gekoppelten zweiten Schnittstelle (14) zur kapazitiven Übertragung von Daten an eine elektronisch gesteuerte Schließeinrichtung (400) und/oder einen Transponder (500).

## Beschreibung

Die Erfindung betrifft eine Vorrichtung gemäß Oberbegriff von Anspruch 1. Weiter betrifft die Erfindung eine Anordnung mit einer solchen Vorrichtung und einem Gehäuse gemäß dem nebengeordneten Anspruch. Außerdem betrifft die Erfindung ein Set mit einer solchen Anordnung und einem Smartphone.

Elektronisch gesteuerte Schließvorrichtungen wie bspw. elektronische Schlösser müssen zumindest einmal programmiert werden. Dies erfolgt zumeist dann, wenn die Schließvorrichtungen am Einsatzort verbaut wurden, um diese auf die speziellen Anforderungen vor Ort anzupassen. Die Anmelderin vertreibt zu diesem Zweck an Firmen, die derartige Schließvorrichtungen verbauen und durch Wartung betreuen, ein Programmiergerät mit der Bezeichnung SXPG. Hiermit lassen sich entsprechende Schließvorrichtungen programmieren. Es besteht jedoch Optimierungspotential. So ist dieses Programmiergerät in der Herstellung vergleichsweise aufwändig und teuer. Eine Übertragung von Programmierdaten erfordert eine drahtgebundene Verbindung des Programmiergeräts mit einem PC (Personal Computer). Die Bedienung des Programmiergeräts ist bisweilen umständlich.

Der Erfindung liegt die Aufgabe zugrunde, eine vergleichsweise einfache, kostengünstige und zeitgemäße Programmierung elektronisch gesteuerter Schließvorrichtungen zu ermöglichen.

Die Erfindung löst diese Aufgabe durch eine Vorrichtung gemäß Anspruch 1.

Die Vorrichtung dient insbesondere zur Programmierung von Schließvorrichtungen und/oder Transpondern. Die Vorrichtung weist eine erste Schnittstelle auf, die dazu eingerichtet und/oder bestimmt ist, um Daten von einem Smartphone oder Tablet zu empfangen. Die Vorrichtung weist zudem eine zweite Schnittstelle auf, die mit der ersten Schnittstelle gekoppelt ist. Die zweite Schnittstelle ist zur kapazitiven Übertragung von Daten (drahtlose Datenübertragung) an eine elektronisch gesteuerte Schließeinrichtung und/oder einen Transponder eingerichtet und/oder bestimmt.

Mittels dieser Vorrichtung kann ein Smartphone oder Tablet um ein kapazitives Interface erweitert werden. Somit kann ein mit einer entsprechenden App ausgerüstetes Smartphone mittels der Vorrichtung drahtlos mit einer elektronisch gesteuerten Schließvorrichtung oder einem Transponder gekoppelt werden, und zwar mittels kapazitiver Kopplung zur Datenübertragung auf kapazitivem Wege. Die Vorrichtung und das Smartphone oder Tablet bilden gemeinsam ein Programmiergerät.

Bei den Daten, die die Vorrichtung vom Smartphone empfängt und an die Schließvorrichtung oder den Transponder übermittelt, kann es sich um Programmier- und/oder Zutrittsdaten handeln.

In vorteilhafter Weise kann die erste Schnittstelle als drahtlose Schnittstelle ausgebildet sein. Dies hat Vorteile in der Handhabung, bspw. können Smartphone und Vorrichtung mit gewissem Abstand separat voneinander gehandhabt werden. Lediglich die Vorrichtung muss für eine kapazitive Kopplung, bspw. zur Programmierung, an die Schließvorrichtung bzw. den Transponder herangeführt werden, nicht auch das Smartphone. Die drahtlose Schnittstelle kann bspw. als WLAN-Schnittstelle oder Bluetooth-Schnittstelle ausgebildet sein. Optional kann die Vorrichtung zur netzunabhängigen Versorgung mit elektrischer Energie eine Batterie oder einen Akku aufweisen. Die Vorrichtung kann auch für eine drahtlose Energieversorgung mit elektrischer Energie eingerichtet sein (Wireless Power).

Alternativ hierzu kann die erste Schnittstelle im Rahmen einer bevorzugten Ausgestaltung als drahtgebundene Schnittstelle ausgebildet sein. Dies trägt zu einem einfachen und kompakten Aufbau bei, da die Vorrichtung mittels der ersten Schnittstelle mit elektrischer Energie versorgt und am Smartphone befestigt werden kann. Die drahtgebundene erste Schnittstelle kann als zum Anschluss am Smartphone komplementär ausgebildeter Konnektor ausgebildet sein, bspw. als männlicher Stecker. Dieser kann in eine weibliche Buchse am Smartphone eingesteckt werden. Der männliche Stecker kann als USB-Stecker, bspw. als Micro-USB-Stecker ausgebildet sein.

In vorteilhafter Weise kann die Vorrichtung derart ausgebildet sein, dass die Vorrichtung bei drahtgebundener Ausgestaltung der ersten Schnittstelle durch Einstecken der ersten Schnittstelle in einen zur ersten Schnittstelle komplementären Anschluss eines Smartphones am Smartphone befestigt und durch das Smartphone gehalten bzw. getragen werden kann. Dies begünstigt die Handhabung, da ein mit der Vorrichtung gekoppeltes Smartphone in der Praxis ebenso einfach gehandhabt werden kann wie ein herkömmliches Smartphone (ohne Vorrichtung).

In zweckmäßiger Weise kann die erste Schnittstelle bei drahtgebundener Ausgestaltung an einer ersten Seite der Vorrichtung angeordnet sein und an einer, vorzugsweise gegenüberliegenden, zweiten Seite kann eine weitere drahtgebundene Schnittstelle angeordnet sein, die elektronisch mit der ersten Schnittstelle verbunden und zur ersten Schnittstelle komplementär ausgebildet ist. Somit können dann, wenn die Vorrichtung an das Smartphone angeschlossen ist, weiterhin andere Geräte an das Smartphone angeschlossen werden ("durchgeschleifter Anschluss"). Die weitere Schnittstelle kann als weibliche Buchse ausgebildet sein (wie am Smartphone). Bspw. kann die weitere Schnittstelle als USB-Buchse ausgebildet sein, bspw. eine Micro-USB-Buchse. Die elektronische Verbindung der ersten Schnittstelle mit der weiteren Schnittstelle kann insbesondere als USB-Verbindung ausgebildet sein.

Im Rahmen einer bevorzugten Ausgestaltung können die erste Schnittstelle und die zweite Schnittstelle mittels einer Steuereinheit elektronisch miteinander gekoppelt sein. Die Steuereinheit weist einen Mikrocontroller auf und ist dazu eingerichtet, um ein erstes Signal von der ersten Schnittstelle (bspw. ein serielles Signal) in ein kapazitives Signal umzuwandeln und/oder ein kapazitives Signal von der zweiten Schnittstelle in ein erstes Signal umzuwandeln (bspw. ein serielles Signal). Mittels der Steuereinheit können Steuerbefehle umgesetzt werden. Auch eine Signalverarbeitung ist möglich, insbesondere eine Signalumwandlung (bspw. in ein serielles Signal).

Im Konkreten kann die zweite Schnittstelle eine kapazitive Sende- und Empfangseinrichtung (bspw. SE-Transceiver) und eine daran angeschlossene kapazitive Antenne (bspw. SE-Antenne) aufweisen. Hiermit ist eine Übertragung von Daten durch kapazitive Kopplung möglich. Kapazitive Schnittstellen werden seitens der Anmelderin als SE-Transceiver oder als SE-Antenne bezeichnet. "SE" steht hier für "skin entry", also für das Auslösen eines Signals an einer elektronischen Schließeinrichtung allein durch Näherkommen mittels kapazitiver Kopplung.

In vorteilhafter Weise kann die Vorrichtung eine elektronische Platine aufweisen, mit der die genannten elektronischen Komponenten der Vorrichtung, insbesondere die erste Schnittstelle, die zweite Schnittstelle (kapazitive Sende- und Empfangseinrichtung und Antenne), die weitere Schnittstelle und die Steuereinheit, gekoppelt und/oder an der Platine befestigt sind. Dies trägt zu einer kompakten und stabilen Anordnung bei. Eine Befestigung der Vorrichtung am Smartphone mittels der ersten Schnittstelle bei drahtgebundener Ausgestaltung wird begünstigt.

Im Rahmen einer bevorzugten Ausgestaltung kann die Vorrichtung derart eingerichtet sein, dass bei drahtgebundener Ausgestaltung der ersten Schnittstelle die Vorrichtung bzw. die elektronischen Komponenten der Vorrichtung über die erste Schnittstelle mit elektrische Energie versorgt werden kann bzw. können. Dies trägt zu einem konstruktiv einfachen und kompakten Aufbau der Vorrichtung bei, da bspw. auf einen Akku oder eine Batterie in der Vorrichtung verzichtet werden kann.

In zweckmäßiger Weise können die erste Schnittstelle und/oder die zweite Schnittstelle jeweils derart eingerichtet sein, dass eine bidirektionale Datenübertragung möglich ist. Dies eröffnet weitere Anwendungsmöglichkeiten. Somit kann mittels der Vorrichtung nicht nur eine Programmierung erfolgen, sondern es kann auch eine Rückmeldung über eine erfolgreiche Programmierung erhalten werden. Auch eine Diagnose oder eine Wartung bspw. einer elektronischen Schließvorrichtung oder eines Transponders sind möglich.

Die eingangs genannte Aufgabe wird auch durch eine Anordnung mit den Merkmalen des nebengeordneten Anspruchs gelöst.

Die Anordnung weist eine Vorrichtung mit einem oder mehreren der voranstehend beschriebenen Aspekte und ein Gehäuse zur Befestigung der Vorrichtung an einem Smartphone oder Tablet auf. Das Gehäuse ist dazu ausgebildet, um die Vorrichtung im Gehäuseinneren aufzunehmen.

Die Vorrichtung kann sich also in einem Gehäuse, bspw. einer Smartphone-Schale, befinden. Die Vorrichtung kann in das Gehäuse, bspw. die Smartphone-Schale, integriert sein. Durch Einbringen oder Einlegen eines Smartphones in das Gehäuse kann der Kontakt, insbesondere der USB-Kontakt zur Vorrichtung hergestellt werden. Das Gehäuse kann das Smartphone insbesondere schalenartig umgreifen, um das Gehäuse und damit auch die Vorrichtung relativ zum Smartphone zu fixieren.

Alternativ kann das Gehäuse auf der einen Seite als Schnittstelle bspw. eine durchgeschleifte USB-Buche und auf der anderen Seite eine Öffnung aufweisen, in die das Smartphone eingeschoben werden kann. Die Öffnung kann an die Abmessung (Höhe und Breite) des Smartphones adaptierbar ausgebildet sein, so dass eine stabile mechanische und dichte Verbindung der Anordnung bzw. der Vorrichtung und dem Smartphone entsteht.

Somit nimmt das Gehäuse die Vorrichtung auf und schützt diese vor Umgebungseinflüssen. Zudem kann die Vorrichtung mittels des Gehäuses am Smartphone oder Tablet befestigt werden. Bspw. kann das Gehäuse die, bspw. mittels Einstecken der ersten Schnittstelle der Vorrichtung am Smartphone befestigte Vorrichtung, am Smartphone sichern und damit eine Befestigung unterstützen. Zur Befestigung des Gehäuses am Smartphone oder Tablet sind grundsätzlich unterschiedliche Ausgestaltungen denkbar. So kann das Gehäuse am Smartphone mittels Kleben (selbstklebendes Gehäuse), mittels einem oder mehreren Magneten, durch eine kraftschlüssige und/oder eine formschlüssige Verbindung befestigt werden.

In vorteilhafter Weise kann die Vorrichtung reversibel aus dem Gehäuse entnehmbar und in dieses einsetzbar sein. Dadurch ist die Vorrichtung aus dem Gehäuse herausnehmbar. Dies kann die Kopplung der Vorrichtung mit dem Smartphone oder Tablet ggf. erleichtern. Zudem kann das Gehäuse ersetzt und die Vorrichtung beibehalten werden.

Alternativ hierzu kann die Vorrichtung fest mit dem Gehäuse verbunden sein. Durch die feste Verbindung ist eine besonders sichere und stabile Zuordnung der Vorrichtung am Gehäuse geschaffen. Bspw. kann die Vorrichtung mit dem Gehäuse vergossen sein.

Im Rahmen einer bevorzugten Ausgestaltung kann das Gehäuse ausgebildet sein, um das Smartphone oder Tablet aufzunehmen und das Smartphone als Schutzhülle zu vier oder fünf Körperseiten zumindest abschnittsweise zu umgeben. Somit kann das Gehäuse als Schutzhülle die Vorrichtung und das Smartphone oder Tablet aufnehmen. Das Gehäuse bzw. die Schutzhülle kann jeweils zu vier oder fünf Körperseiten zumindest abschnittsweise geschlossene Wandabschnitte aufweisen.

Das Gehäuse kann als selbstklebende Schutzhülle ausgebildet sein, bspw. als Rahmen. Alternativ hierzu kann das Gehäuse als flexible Schutzhülle ausgebildet sein, bspw. aus Silikon. Die flexible Schutzhülle kann zum Anbringen am Smartphone dehnbar ausgebildet sein (Schutzhülle zum Anbringen elastisch verformbar).

Zur weiteren Ausgestaltung der Anordnung können die im Zusammenhang mit der Vorrichtung erläuterten und/oder die nachfolgend noch beschriebenen Maßnahmen dienen.

Die eingangs genannte Aufgabe wird auch durch ein Set, bestehend aus einer Anordnung mit einem oder mehreren der voranstehenden Aspekte und einem Smartphone oder Tablet gelöst. Hinsichtlich der erzielbaren Vorteile sei auf die diesbezüglichen Ausführungen zur Vorrichtung oder zur Anordnung verwiesen.

In vorteilhafter Weise kann das Smartphone oder Tablet ein darauf ablaufendes, vom Betriebssystem abweichendes Programm aufweisen. Durch das Programm ist das Set dazu eingerichtet, um mit der Vorrichtung durch kapazitive Datenübertragung über die zweite Schnittstelle der Vorrichtung eine elektronisch gesteuerte Schließvorrichtung und/oder einen Transponder zur Betätigung der elektronisch gesteuerten Schließvorrichtung zu programmieren. Somit bilden Vorrichtung und Smartphone oder Tablet ein Programmiergerät, welches zur Konfiguration von entsprechenden Schließvorrichtungen und/oder Transpondern eingesetzt werden kann. Als Daten können bspw. Programmierdaten übertragen werden.

Im Rahmen einer bevorzugten Ausgestaltung kann das Programm bzw. durch das Programm das Set dazu eingerichtet sein, um mittels der Vorrichtung durch kapazitive Datenübertragung über die zweite Schnittstelle ein weiteres, ebenfalls mit der Vorrichtung ausgestattetes Smartphone oder Tablet zu programmieren. Somit kann eine Übertragung von Daten, insbesondere von Zutrittsrechten oder Programmierdaten von einem Programmiergerät (Smartphone und Vorrichtung) zu einem weiteren Programmiergerät (weiteres Smartphone und weitere Vorrichtung) erfolgen. Mit anderen Worten kann ein Programmiergerät eingesetzt werden, um ein weiteres Programmiergerät zu programmieren oder zu konfigurieren.

In vorteilhafter Weise kann das Smartphone oder Tablet ein (weiteres) vom Betriebssystem abweichendes, auf dem Smartphone oder Tablet ablaufendes Programm aufweisen. Durch das Programm ist das Set dazu eingerichtet, um mittels der Vorrichtung durch kapazitive Datenübertragung an der zweiten Schnittstelle der Vorrichtung elektronisch gesteuerte Schließvorrichtungen zu betätigen bzw. zu öffnen. Somit können das Smartphone oder Tablet und die Vorrichtung als Transponder (elektronischer Schlüssel) zur Betätigung einer elektronisch gesteuerten Schließvorrichtung eingesetzt werden.

Zur weiteren Ausgestaltung des Sets können die im Zusammenhang mit der Vorrichtung oder der Anordnung erläuterten und/oder die nachfolgend noch beschriebenen Maßnahmen dienen.

Die Erfindung wird nachfolgend anhand der Figuren näher erläutert, wobei gleiche oder funktional gleiche Elemente mit identischen Bezugszeichen versehen sind, ggf. jedoch lediglich einmal. Es zeigen, jeweils schematisch,
- Fig.1a-c: eine Vorrichtung, eine Anordnung und ein Set; und
- Fig.2: die Vorrichtung aus Fig.1 zusammen mit einem Smartphone, einer elektronisch gesteuerten Schließvorrichtung und einem Transponder.

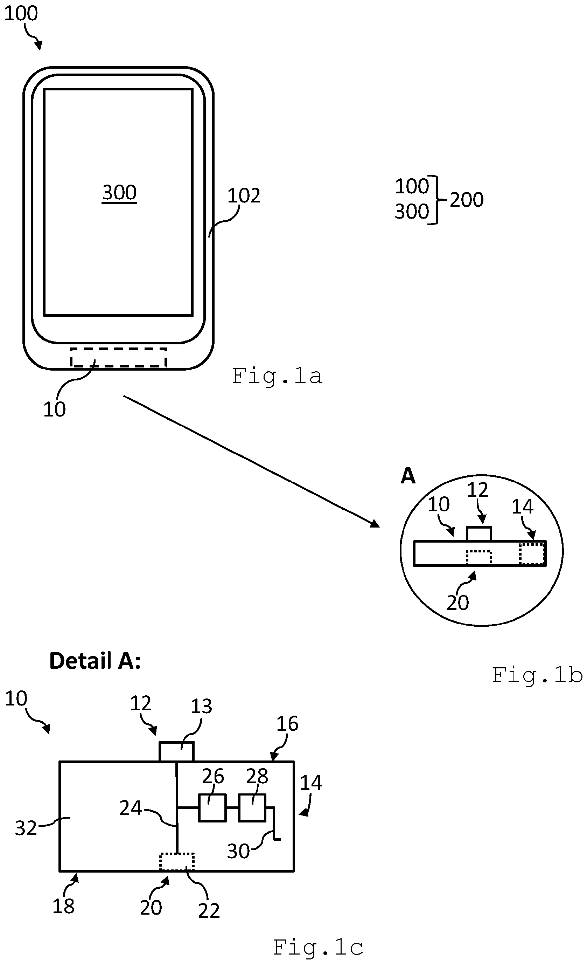

Figur 1a-c zeigt in einer schematischen Ansicht eine Vorrichtung, die insgesamt mit dem Bezugszeichen 10 bezeichnet ist. Weiter zeigt Figur 1a-c eine Anordnung 100 mit einer solchen Vorrichtung 10 und einem Gehäuse 102. Außerdem zeigt Figur 1a-c ein Set 200 mit einer solchen Anordnung 100 und einem Smartphone 300. Nachfolgend wird zunächst die Vorrichtung 10 beschrieben.

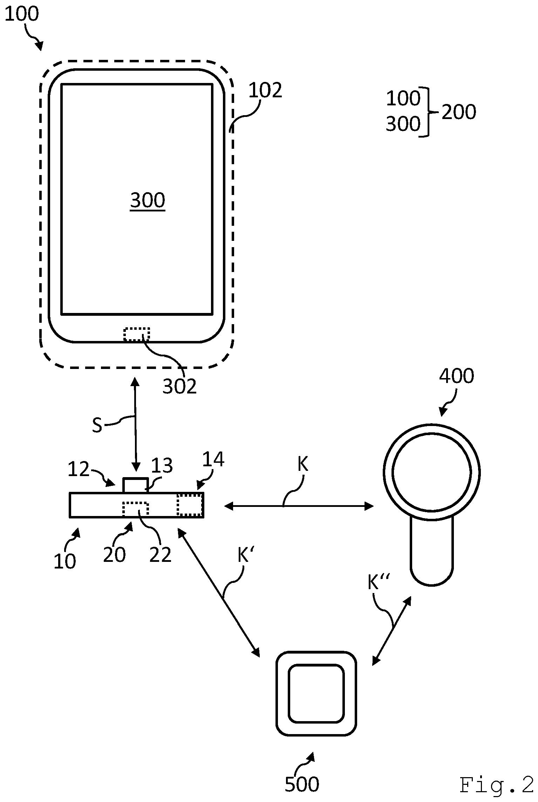

Die Vorrichtung 10 weist eine erste Schnittstelle 12 zum Empfangen von Daten von einem Smartphone 300 auf (vgl. Fig.1c). Weiter weist die Vorrichtung 10 eine mit der ersten Schnittstelle 12 gekoppelte zweite Schnittstelle 14 zur kapazitiven Übertragung von Daten an eine elektronisch gesteuerte Schließvorrichtung 400 und/oder einen Transponder 500 auf (vgl. Fig.2).

Die erste Schnittstelle 12 ist im Beispiel als drahtgebundene Schnittstelle 12 ausgebildet (vgl. Fig.1b und c). Die erste Schnittstelle 12 ist als zum Anschluss 302 am Smartphone 300 komplementärer Konnektor ausgebildet, im Beispiel als (männlicher) Stecker 13. Dabei kann es sich um einen USB-Stecker wie bspw. einen Micro-USB-Stecker handeln.

Die Vorrichtung 10 ist im Beispiel derart ausgebildet, dass die Vorrichtung 10 durch Einstecken des Steckers 13 in den komplementären Anschluss 302 des Smartphones 300 (vgl. Fig.2) am Smartphone 300 befestigt und durch das Smartphone 300 gehalten werden kann. Eine zusätzliche Fixierung kann durch das Gehäuse 102 der Anordnung 100 erfolgen.

Die erste Schnittstelle 12 bzw. der Stecker 13 ist an einer ersten Seite 16 der Vorrichtung 10 angeordnet und an einer zweiten, im Beispiel gegenüberliegenden Seite 18 ist eine weitere (drahtgebundene) Schnittstelle 20 angeordnet. Die Schnittstelle 20 ist elektronisch mit der ersten Schnittstelle 12 verbunden und zur ersten Schnittstelle 12 komplementär ausgebildet, im Beispiel als (weibliche) Buchse 22. Dabei kann es sich um eine USB-Buchse wie bspw. eine Micro-USB-Buchse handeln. Die elektronische Verbindung 24 der ersten Schnittstelle 12 mit der weiteren Schnittstelle 20 kann bspw. als USB-Verbindung ausgebildet sein.

Die erste Schnittstelle 12 und die zweite Schnittstelle 14 sind mittels einer Steuereinheit 26 elektronisch miteinander gekoppelt, wobei die Steuereinheit 26 einen Mikrocontroller aufweist (nicht gezeigt). Die Steuereinheit 26 ist dazu eingerichtet, um ein erstes Signal S von der ersten Schnittstelle 12 (bspw. ein serielles Signal S) in ein kapazitives Signal K, K' umzuwandeln und/oder ein kapazitives Signal K, K' von der zweiten Schnittstelle 14 in ein erstes Signal umzuwandeln (bspw. ein serielles Signal S; vgl. Fig.2). Die zweite Schnittstelle 14 weist eine kapazitive Sende- und Empfangseinrichtung 28 und eine daran angeschlossene kapazitive Antenne 30 auf (vgl. Fig.1c).

Die Vorrichtung 10 weist im Beispiel eine elektronische Platine 32 auf, mit der die erste Schnittstelle 12 bzw. der Stecker 13, die Steuereinheit 26, die zweite Schnittstelle 14 bzw. die kapazitive Sende- und Empfangseinrichtung 28 und die kapazitive Antenne 30 und die weitere Schnittstelle 20 bzw. die Buchse 22 gekoppelt sind. Im Beispiel sind die genannten Komponenten auch an der Platine 32 befestigt.

Die Vorrichtung 10 ist im Beispiel derart eingerichtet, dass die Vorrichtung 10 bzw. die im vorigen Absatz genannten elektronischen Komponenten der Vorrichtung 10 über die erste Schnittstelle 12 bzw. den Stecker 13 mit elektrischer Energie versorgt werden können. Unabhängig davon sind im Beispiel die erste Schnittstelle 12 und die zweite Schnittstelle 14 jeweils derart eingerichtet, dass eine bidirektionale Datenübertragung möglich ist.

Die Anordnung 100 weist die Vorrichtung 10 und ein Gehäuse 102 zur Befestigung der Vorrichtung 10 am Smartphone 300 auf. Das Gehäuse 102 ist dazu ausgebildet, um die Vorrichtung 10 im Gehäuseinneren aufzunehmen (vgl. Fig.1a). Das Gehäuse 102 kann eine Befestigung der Vorrichtung 10 am Smartphone 300 unterstützen, da die Vorrichtung 10 im Beispiel bereits durch Einstecken des Steckers 13 in die Buchse 302 des Smartphones 300 am Smartphone 300 befestigt werden kann.

Die Vorrichtung 10 kann reversibel aus dem Gehäuse 102 entnehmbar und in dieses einsetzbar sein oder die Vorrichtung 10 kann fest mit dem Gehäuse 102 verbunden sein, wie oben erläutert.

Im Beispiel ist das Gehäuse 102 dazu ausgebildet, um das Smartphone 300 aufzunehmen und das Smartphone 300 als Schutzhülle zu vier oder fünf Körperseiten zumindest abschnittsweise zu umgeben (vgl. Fig.1a). Im Beispiel ist das Gehäuse 102 als flexible Schutzhülle ausgebildet, bspw. aus Silikon, die zum Anbringen am Smartphone 300 entsprechend gedehnt werden kann.

Das Set 200 weist die Anordnung 100, umfassend das Gehäuse 102 und die Vorrichtung 10, und das Smartphone 300 auf (vgl. Fig.1a).

Das Smartphone 300 weist ein darauf ablaufendes, vom Betriebssystem abweichendes Programm auf, um mit der Vorrichtung 10 durch kapazitive Datenübertragung K, K' über die zweite Schnittstelle 14 eine elektronisch gesteuerte Schließvorrichtung 400 und/oder einen Transponder 500 zur Betätigung der elektronisch gesteuerten Schließvorrichtung 400 zu programmieren (vgl. Fig.2; zur besseren Übersichtlichkeit ist darin das Gehäuse 102 nur gestrichelt dargestellt). Die Kommunikation zwischen Smartphone 300 und der ersten Schnittstelle 12 der Vorrichtung 10, i.e. die Kommunikation zwischen Stecker 13 und Buchse 22, erfolgen im Beispiel drahtgebunden durch serielle Datenübertragung S (vgl. Fig.2; zur besseren Übersichtlichkeit ist die Vorrichtung 10 separat vom Smartphone 300 dargestellt).

Die Vorrichtung 10 und das Smartphone 300 bilden somit ein Programmiergerät, welches zur Programmierung für die Schließvorrichtung 400 (kapazitive Datenübertragung K) und/oder den Transponder 500 (kapazitive Datenübertragung K') eingesetzt werden kann. Wurden die Schließvorrichtung 400 und der Transponder 500 entsprechend programmiert, kann der Transponder 500 mittels kapazitiver Datenübertragung K'' die Schließvorrichtung 400 betätigen und diese entriegeln.

Das besagte Programm des Smartphones 300 kann optional dazu eingerichtet sein, um mittels der Vorrichtung 10 durch kapazitive Datenübertragung K' über die zweite Schnittstelle 14 der Vorrichtung 10 ein weiteres, ebenfalls mit der Vorrichtung 10 ausgestattetes Smartphone zu programmieren (nicht dargestellt). Somit kann sozusagen mit einem Programmiergerät ein weiteres Programmiergerät programmiert werden. Alternativ hierzu können die Smartphones via WLAN, Bluetooth Low Energy (BLE) oder über eine Mobilfunkverbindung kommunizieren.

Das Smartphone 300 kann ein weiteres vom Betriebssystem abweichendes, auf dem Smartphone 300 ablaufendes Programm aufweisen, um mittels der Vorrichtung 10 durch kapazitive Datenübertragung K an der zweiten Schnittstelle 14 der Vorrichtung 10 die elektronisch gesteuerte Schließvorrichtung 500 zu betätigen bzw. zu öffnen. Somit können das Smartphone 300 und die Vorrichtung 10 als Transponder (elektronischer Schlüssel) zur Betätigung der elektronisch gesteuerten Schließvorrichtung 500 eingesetzt werden.

## Patentansprüche

1. Vorrichtung (10) mit einer ersten Schnittstelle (12) zum Empfangen von Daten von einem Smartphone (300) oder Tablet und einer mit der ersten Schnittstelle (12) gekoppelten zweiten Schnittstelle (14) zur kapazitiven Übertragung von Daten an eine elektronisch gesteuerte Schließeinrichtung (400) und/oder einen Transponder (500).

2. Vorrichtung (10) nach Anspruch 1, **dadurch gekennzeichnet, dass** die erste Schnittstelle (12) als drahtlose Schnittstelle oder als drahtgebundene Schnittstelle ausgebildet ist.

3. Vorrichtung (10) nach Anspruch 2, **dadurch gekennzeichnet, dass** die Vorrichtung (10) derart ausgebildet ist, dass die Vorrichtung (10) bei drahtgebundener Ausgestaltung der ersten Schnittstelle (12) durch Einstecken der ersten Schnittstelle (12) in einen zur ersten Schnittstelle (12) komplementären Anschluss (302) eines Smartphones (300) am Smartphone (300) befestigt und durch das Smartphone (300) gehalten werden kann.

4. Vorrichtung (10) nach Anspruch 2 oder 3, **dadurch gekennzeichnet, dass** die erste Schnittstelle (12) bei drahtgebundener Ausgestaltung an einer ersten Seite (16) der Vorrichtung (10) angeordnet ist und an einer, vorzugsweise gegenüberliegenden, zweiten Seite (18) eine weitere drahtgebundene Schnittstelle (20) angeordnet ist, die elektronisch mit der ersten Schnittstelle (12) verbunden und zur ersten Schnittstelle (12) komplementär ausgebildet ist.

5. Vorrichtung (10) nach einem der voranstehenden Ansprüche, **dadurch gekennzeichnet, dass** die erste Schnittstelle (12) und die zweite Schnittstelle (14) mittels einer Steuereinheit (26) elektronisch miteinander gekoppelt sind, wobei die Steuereinheit (26) einen Mikrocontroller aufweist und dazu eingerichtet ist, um ein erstes Signal (S) von der ersten Schnittstelle (12) in ein kapazitives Signal (K, K') umzuwandeln und/oder ein kapazitives Signal (K, K') von der zweiten Schnittstelle (14) in ein erstes Signal (S) umzuwandeln.

6. Vorrichtung (10) nach einem der voranstehenden Ansprüche, **dadurch gekennzeichnet, dass** die zweite Schnittstelle (12) eine kapazitive Sende- und Empfangseinrichtung (28) und eine daran angeschlossene kapazitive Antenne (30) aufweist.

7. Vorrichtung (10) nach einem der voranstehenden Ansprüche, **dadurch gekennzeichnet, dass** die Vorrichtung (10) eine elektronische Platine (32) aufweist, mit der die elektronischen Komponenten der Vorrichtung (10) gekoppelt sind.

8. Vorrichtung (10) nach einem der Ansprüche 2 bis 7, **dadurch gekennzeichnet, dass** die Vorrichtung (10) derart eingerichtet ist, dass bei drahtgebundener Ausgestaltung der ersten Schnittstelle (12) die Vorrichtung (10) über die erste Schnittstelle (12) mit elektrischer Energie versorgt werden können.

9. Vorrichtung (10) nach einem der voranstehenden Ansprüche, **dadurch gekennzeichnet, dass** die erste Schnittstelle (12) und/oder die zweite Schnittstelle (14) jeweils derart eingerichtet sind, dass eine bidirektionale Datenübertragung möglich ist.

10. Anordnung (100), aufweisend eine Vorrichtung (10) nach einem der voranstehenden Ansprüche und ein Gehäuse (102) zur Befestigung der Vorrichtung (10) an einem Smartphone (300) oder Tablet, wobei das Gehäuse (102) dazu ausgebildet ist, um die Vorrichtung (10) im Gehäuseinneren aufzunehmen.

11. Anordnung (100) nach Anspruch 10, **dadurch gekennzeichnet, dass** das Gehäuse (102) ausgebildet ist, um das Smartphone (300) oder Tablet aufzunehmen und dieses als Schutzhülle zu vier oder fünf Körperseiten zumindest abschnittsweise zu umgeben.

12. Set (200), bestehend aus einer Anordnung (100) nach Anspruch 10 oder 11 und einem Smartphone (300) oder Tablet.

13. Set (200) nach Anspruch 12, **dadurch gekennzeichnet, dass** das Smartphone (300) oder Tablet ein darauf ablaufendes, vom Betriebssystem abweichendes Programm aufweist, um mit der Vorrichtung (10) durch kapazitive Datenübertragung (K, K') über die zweite Schnittstelle (14) eine elektronisch gesteuerte Schließvorrichtung (400) und/oder einen Transponder (500) zur Betätigung der elektronisch gesteuerten Schließvorrichtung (400) zu programmieren.

14. Set (200) nach Anspruch 13, **dadurch gekennzeichnet, dass** das Programm dazu eingerichtet ist, um mittels der Vorrichtung (10) durch kapazitive Datenübertragung (K, K') über die zweite Schnittstelle (14) ein weiteres, ebenfalls mit der Vorrichtung ausgestattetes Smartphone oder Tablet zu programmieren.

15. Set (200) nach einem der Ansprüche 12 bis 14, **dadurch gekennzeichnet, dass** das Smartphone (300) oder Tablet ein vom Betriebssystem abweichendes, auf dem Smartphone ablaufendes Programm aufweist, um mittels der Vorrichtung (10) durch kapazitive Datenübertragung (K, K') an der zweiten Schnittstelle (14) eine elektronisch gesteuerte Schließvorrichtung (400) zu betätigen bzw. zu öffnen.

## Geänderte Patentansprüche

### Geänderte Patentansprüche gemäss Regel 137(2) EPÜ.

1. Vorrichtung (10) mit einer ersten Schnittstelle (12) zum Empfangen von Daten von einem Smartphone (300) oder Tablet und einer mit der ersten Schnittstelle (12) gekoppelten zweiten Schnittstelle (14) zur kapazitiven Übertragung von Daten an eine elektronisch gesteuerte Schließeinrichtung (400) und/oder einen Transponder (500), **dadurch gekennzeichnet, dass** die erste Schnittstelle (12) als drahtgebundene Schnittstelle ausgebildet ist, wobei die Vorrichtung (10) derart ausgebildet ist, dass die Vorrichtung (10) durch Einstecken der ersten Schnittstelle (12) in einen zur ersten Schnittstelle (12) komplementären Anschluss (302) eines Smartphones (300) am Smartphone (300) befestigt und durch das Smartphone (300) gehalten werden kann.

2. Vorrichtung (10) nach Anspruch 1, **dadurch gekennzeichnet, dass** die erste Schnittstelle (12) bei drahtgebundener Ausgestaltung an einer ersten Seite (16) der Vorrichtung (10) angeordnet ist und an einer, vorzugsweise gegenüberliegenden, zweiten Seite (18) eine weitere drahtgebundene Schnittstelle (20) angeordnet ist, die elektronisch mit der ersten Schnittstelle (12) verbunden und zur ersten Schnittstelle (12) komplementär ausgebildet ist.

3. Vorrichtung (10) nach einem der voranstehenden Ansprüche, **dadurch gekennzeichnet, dass** die erste Schnittstelle (12) und die zweite Schnittstelle (14) mittels einer Steuereinheit (26) elektronisch miteinander gekoppelt sind, wobei die Steuereinheit (26) einen Mikrocontroller aufweist und dazu eingerichtet ist, um ein erstes Signal (S) von der ersten Schnittstelle (12) in ein kapazitives Signal (K, K') umzuwandeln und/oder ein kapazitives Signal (K, K') von der zweiten Schnittstelle (14) in ein erstes Signal (S) umzuwandeln.

4. Vorrichtung (10) nach einem der voranstehenden Ansprüche, **dadurch gekennzeichnet, dass** die zweite Schnittstelle (12) eine kapazitive Sende- und Empfangseinrichtung (28) und eine daran angeschlossene kapazitive Antenne (30) aufweist.

5. Vorrichtung (10) nach einem der voranstehenden Ansprüche, **dadurch gekennzeichnet, dass** die Vorrichtung (10) eine elektronische Platine (32) aufweist, mit der die elektronischen Komponenten der Vorrichtung (10) gekoppelt sind.

6. Vorrichtung (10) nach einem der voranstehenden Ansprüche, **dadurch gekennzeichnet, dass** die Vorrichtung (10) derart eingerichtet ist, dass bei drahtgebundener Ausgestaltung der ersten Schnittstelle (12) die Vorrichtung (10) über die erste Schnittstelle (12) mit elektrischer Energie versorgt werden können.

7. Vorrichtung (10) nach einem der voranstehenden Ansprüche, **dadurch gekennzeichnet, dass** die erste Schnittstelle (12) und/oder die zweite Schnittstelle (14) jeweils derart eingerichtet sind, dass eine bidirektionale Datenübertragung möglich ist.

8. Anordnung (100), aufweisend eine Vorrichtung (10) nach einem der voranstehenden Ansprüche und ein Gehäuse (102) zur Befestigung der Vorrichtung (10) an einem Smartphone (300) oder Tablet, wobei das Gehäuse (102) dazu ausgebildet ist, um die Vorrichtung (10) im Gehäuseinneren aufzunehmen.

9. Anordnung (100) nach Anspruch 8, **dadurch gekennzeichnet, dass** das Gehäuse (102) ausgebildet ist, um das Smartphone (300) oder Tablet aufzunehmen und dieses als Schutzhülle zu vier oder fünf Körperseiten zumindest abschnittsweise zu umgeben.

10. Set (200), bestehend aus einer Anordnung (100) nach Anspruch 8 oder 9 und einem Smartphone (300) oder Tablet.

11. Set (200) nach Anspruch 10, **dadurch gekennzeichnet, dass** das Smartphone (300) oder Tablet ein darauf ablaufendes, vom Betriebssystem abweichendes Programm aufweist, um mit der Vorrichtung (10) durch kapazitive Datenübertragung (K, K') über die zweite Schnittstelle (14) eine elektronisch gesteuerte Schließvorrichtung (400) und/oder einen Transponder (500) zur Betätigung der elektronisch gesteuerten Schließvorrichtung (400) zu programmieren.

12. Set (200) nach Anspruch 11, **dadurch gekennzeichnet, dass** das Programm dazu eingerichtet ist, um mittels der Vorrichtung (10) durch kapazitive Datenübertragung (K, K') über die zweite Schnittstelle (14) ein weiteres, ebenfalls mit der Vorrichtung ausgestattetes Smartphone oder Tablet zu programmieren.

13. Set (200) nach einem der Ansprüche 10 bis 12, **dadurch gekennzeichnet, dass** das Smartphone (300) oder Tablet ein vom Betriebssystem abweichendes, auf dem Smartphone oder Tablet ablaufendes Programm aufweist, um mittels der Vorrichtung (10) durch kapazitive Datenübertragung (K, K') an der zweiten Schnittstelle (14) eine elektronisch gesteuerte Schließvorrichtung (400) zu betätigen bzw. zu öffnen.
